# FASCICULE DE BREVET EUROPEEN

(11) **EP 1 028 326 B1**
(45) Date de publication et mention de la délivrance du brevet: **07.01.2004**
(21) Numéro de dépôt: 00400337.2
(22) Date de dépôt: 08.02.2000
(51) Int. Cl.: G01V 3/02, G01R 31/02

(54) **Procédé et appareil de détection de gradients de potentiel à la surface du sol**
Verfahren und Vorrichtung zur Ermittlung von Potentialgradienten auf der Bodenoberfläche
Method and apparatus to detect potential gradients at the surface of the ground

(30) Priorité: 10.02.1999 FR 9901561
(43) Date de publication de la demande: 16.08.2000
(73) Titulaire: Capai, Richard, 91740 Pussay (FR)
(72) Inventeur: Capai, Richard, 91740 Pussay (FR)
(74) Mandataire: Arnaud, Jean Pierre Alfred

(56) Documents cités:
- WO-A-92/13286
- FR-A- 2 728 970
- US-A- 5 126 654

## Description

La présente invention concerne la détermination d'anomalies dans le sol par détection de gradients de potentiel, et elle concerne plus précisément un procédé et un appareil de détection de tels gradients de potentiel permettant la détection d'anomalies, notamment de défauts de revêtement des canalisations enterrées.

On décrit l'invention dans le cas de la détection des défauts du revêtement de canalisations enterrées, telles que des canalisations de gaz ou de pétrole. Cependant, elle a d'autres applications à la détermination d'anomalies dans le sol qui apparaissent sous forme de gradients de potentiel à la surface du sol.

Les canalisations métalliques placées dans le sol sont le plus souvent protégées contre la corrosion par un processus appelé "protection cathodique". En effet, la corrosion des canalisations métalliques laissées dans le sol est due à la circulation de courants aux endroits où la canalisation est au contact du sol. Il existe de nombreux courants qui circulent dans le sol, notamment des courants continus, en particulier des courants telluriques, des courants vagabonds et des perturbations électromagnétiques diverses. Ainsi, lorsqu'un convoi ayant une locomotive à traction électrique circule sur une voie ferrée, des courants vagabonds très intenses circulent dans le sol, jusqu'à des emplacements très éloignés du convoi.

La protection cathodique est assurée par circulation d'un courant dans la canalisation par un circuit passant dans le sol afin que le courant circule toujours dans le sens qui assure la protection de la canalisation contre la corrosion. De cette manière, les défauts du revêtement, tels que de simples piqûres ou des défauts plus importants, ne sont pas la source d'une corrosion importante. Cependant, ce processus ne peut être utilisé que si le courant dit "de soutirage" qui circule n'atteint pas des valeurs excessives. C'est pour cette raison que les canalisations enterrées sont normalement munies d'un revêtement isolant. Pour que le courant de soutirage n'atteigne pas des valeurs excessives, il est donc important de pouvoir déterminer les défauts de l'isolement assuré par le revêtement. Tout défaut d'isolement constitue une source localisée de courant qui provoque la création d'un gradient de potentiel.

En théorie, la détection des défauts d'isolement peut être réalisée simplement par détermination des gradients de potentiel au-dessus d'une canalisation, avec déplacement le long de celle-ci pour en déterminer les anomalies. En pratique, des courants vagabonds et autres qui sont présents et qui constituent des perturbations rendent toute mesure pratiquement inefficace, sauf dans des conditions très particulières.

Pour cette raison, il existe déjà un procédé destiné à la localisation des défauts d'isolement des canalisations, comme par example décrit dans FR-2 728 970-A, dans lequel les gradients de potentiel dus à ces défauts sont localisés par introduction, dans le circuit de soutirage assurant la protection cathodique, d'un interrupteur commandé à une fréquence déterminée, de l'ordre du hertz.

Plus précisément, selon ce procédé, la canalisation est reliée à une alimentation assurant un soutirage et un interrupteur périodique est incorporé dans cette liaison et il travaille par exemple à une fréquence de 1 Hz, avec un facteur cyclique différent de 0,5. Par exemple, le temps de conduction du courant est deux fois plus long que le temps d'absence de conduction. Dans ces conditions, lorsque deux électrodes sont mises au contact de la surface du sol à distance l'une de l'autre et sont reliées par un voltmètre, la commande alternative de l'interrupteur provoque une oscillation de l'aiguille du voltmètre, et le sens de cette oscillation peut être déterminé parce que le temps pendant lequel le courant circule est plus important que le temps pendant lequel il ne circule pas ou inversement. En conséquence, l'aiguille oscille entre deux positions dans l'une desquelles elle reste deux fois plus longtemps que dans l'autre. On sait alors que le gradient de potentiel est orienté de l'une des électrodes vers l'autre. On peut alors se déplacer pour déterminer ainsi un diagramme de potentiel à la surface ou, le plus souvent, l'emplacement d'un défaut par déplacement progressif des électrodes jusqu'à ce que l'oscillation n'existe plus.

Un premier inconvénient de ce procédé est dû aux électrodes. En effet, pour que les potentiels de contact ne perturbent pas irrémédiablement les mesures, il faut utiliser des électrodes soigneusement préparées, par exemple de cuivre/sulfate de cuivre, placées au contact du sol avec interposition d'embouts de bois longuement imprégnés de liquide avant utilisation.

Un second inconvénient de ce procédé est que, pour donner des résultats utilisables, il nécessite, en association avec les électrodes, deux organes de réglage, l'un pour le gain et l'autre pour le réglage de zéro. En effet, pour que ce procédé puisse donner satisfaction, il faut d'une part que l'aiguille se trouve au voisinage du centre du cadran du voltmètre et d'autre part que les oscillations soient suffisamment importantes, mais pas trop, pour que la lecture du sens puisse être effectuée convenablement. Ces deux réglages sont donc d'une part un réglage de zéro et d'autre part un réglage de sensibilité. Ils varient cependant d'un emplacement à un autre et la mesure des gradients de potentiel est parfois très fastidieuse car les organes de réglage des deux électrodes doivent souvent être modifiés à chaque déplacement des électrodes. Ce procédé peut donc parfois se révéler inutilisable, car trop long à mettre en oeuvre. Il est aussi parfois inutilisable lorsque les courants vagabonds présents (par exemple au voisinage d'une usine particulière ou lors du passage d'un convoi) perturbent la mesure au point qu'il n'est plus possible de déterminer avec certitude le sens du gradient de potentiel.

L'invention concerne aussi un procédé de détermination d'anomalies révélées par des gradients de potentiel à la surface du sol, et, en particulier, un tel procédé de détermination de la présence de défauts d'isolement de canalisations.

L'invention a ainsi pour objet un tel procédé dont la mise en oeuvre est très rapide, qui permet l'utilisation d'électrodes simples n'imposant pas une longue préparation, qui ne nécessite pas de réglages perpétuels pour l'observation d'un résultat, qui peut être utilisé même en présence de courants perturbateurs de types très différents, et qui donne un résultat très précis qui peut être indiqué sous diverses formes qui peuvent être choisies pour faciliter la compréhension du résultat.

Ces objets sont atteints selon l'invention grâce à la suppression des réglages de zéro et de sensibilité au niveau des électrodes et grâce au traitement du signal obtenu afin qu'il soit présenté sous une forme commode à utiliser.

Cet objet est atteint selon l'invention grâce à la mise en oeuvre d'un appareil de mesure synchronisé sur l'interrupteur, et par échantillonnage du signal obtenu uniquement au niveau des flancs correspondant à la commande de l'interrupteur. Le filtrage du signal permet la suppression de toute composante continue du courant de mesure, et supprime donc les effets perturbateurs des potentiels de contact.

Plus précisément, l'invention concerne un procédé de détermination d'anomalies dans le sol par détection de gradients de potentiel à la surface du sol, qui comprend la création d'un courant pulsé dans le sol à l'aide d'au moins un générateur de courant pulsé de fréquence déterminée, la mise de deux électrodes au contact du sol à sa surface ou à son voisinage, les électrodes étant placées sur une droite qui détermine une direction, la connexion aux deux électrodes d'un appareil de mesure, la synchronisation du générateur de courant pulsé et de l'appareil de mesure, la commande de l'appareil de mesure pendant une fenêtre synchronisée sur le générateur de courant pulsé afin que l'appareil de mesure ne détecte un signal que pendant la durée de la fenêtre, et le filtrage du signal détecté par l'appareil de mesure pour la détermination d'une valeur ayant un signe et une amplitude, le signe indiquant un sens sur la droite sur laquelle sont placées les électrodes.

De préférence, le filtrage du signal détecté est réalisé à une fréquence comprise entre le cinquième de la fréquence du courant pulsé et cinq fois cette fréquence. Cette plage est de préférence comprise entre la moitié et le double de cette fréquence.

Selon une caractéristique avantageuse, le procédé comprend en outre la variation de la bande passante de filtrage en fonction de la qualité du signal obtenu, notamment en fonction des courants vagabonds présents.

Dans un mode de réalisation, l'appareil de mesure travaille à une fréquence qui est un multiple ou un sous-multiple de la fréquence prédéterminée du courant pulsé.

Bien que la synchronisation du générateur de courant pulsé et de l'appareil de mesure puisse être réalisée par tout moyen, par exemple par synchronisation sur un signal radioélectrique existant, elle peut aussi être effectuée par synchronisation de l'appareil de mesure sur le flanc du courant pulsé lui-même.

L'invention concerne aussi un appareil de détermination d'anomalies dans le sol par détection à la surface du sol de gradients de potentiel créés par un générateur de courant pulsé destiné à créer un courant pulsé dans le sol à une fréquence déterminée, du type qui comprend : deux électrodes destinées à être mises au contact du sol à sa surface ou à son voisinage, les électrodes étant placées sur une droite qui détermine une direction, et un appareil de mesure connecté aux deux électrodes ; selon l'invention, l'appareil comprend en outre un dispositif de synchronisation du générateur de courant pulsé et de l'appareil de mesure, un dispositif de commande de l'appareil de mesure pendant une fenêtre synchronisée sur le générateur de courant pulsé afin que l'appareil de mesure ne détecte un signal que pendant la durée de la fenêtre, et un dispositif de filtrage du signal détecté par l'appareil de mesure, destiné à déterminer une valeur ayant un signe et une amplitude, le signe indiquant un sens sur la droite sur laquelle sont placées les électrodes.

De préférence, l'appareil de mesure comporte un dispositif d'affichage qui indique la valeur du signal détecté sous forme d'un signe et d'une amplitude.

De préférence, l'appareil de mesure comporte un dispositif de réglage d'une caractéristique de filtrage choisie parmi la largeur de la bande de filtrage et la fréquence centrale de la bande de filtrage.

L'appareil comporte de préférence un dispositif de sélection entre un fonctionnement automatique et un fonctionnement manuel. Ainsi, le réglage de zéro est tout à fait superflu sur l'appareil de mesure puisque seule la variation correspondant au flanc d'une impulsion est utilisée. En outre, le réglage de sensibilité est inutile puisque l'appareil détecte lui-même l'amplitude de ce flanc du courant pulsé.

D'autres caractéristiques et avantages de l'invention ressortiront mieux de la description qui va suivre d'exemples de réalisation, faite en référence aux dessins annexés sur lesquels :
la figure 1 est un graphique représentant un exemple de courant permettant la description de la mise en oeuvre de l'appareil de la technique antérieure ;
la figure 2 est un graphique représentant la variation d'un courant obtenu par mise en oeuvre de l'invention ;
la figure 3 est un schéma d'un appareil selon l'invention ; et
la figure 4 est un schéma du tableau de commande de l'appareil selon l'invention, ayant une présentation correspondant à celle de l'appareil connu.

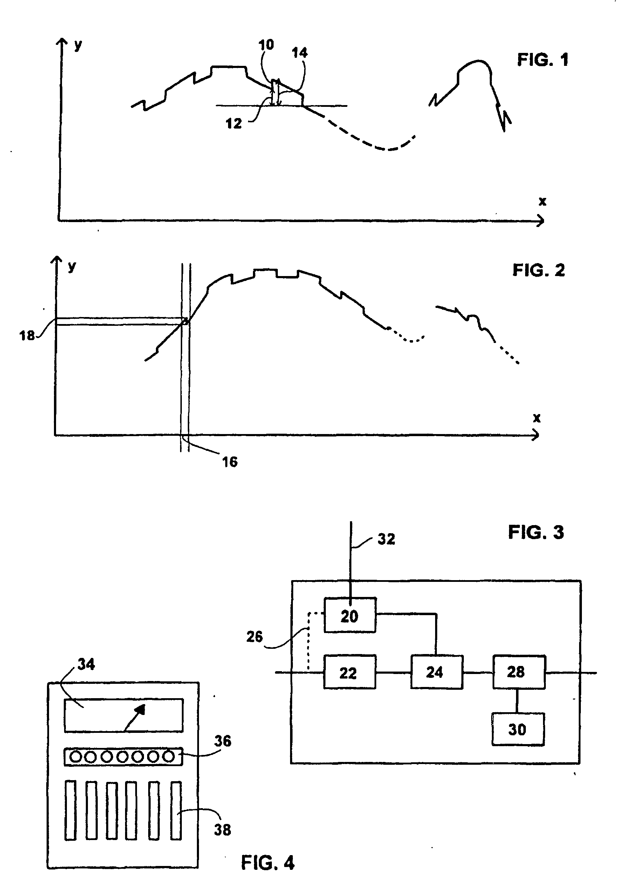

La figure 1 représente un exemple de forme d'onde d'un signal qui est obtenu par mise en oeuvre d'un appareil selon l'invention. Dans un tel appareil, un courant pulsé est par exemple créé par un générateur comprenant un interrupteur commandé cycliquement, placé dans le circuit de l'alimentation du courant de soutirage raccordée à la canalisation à protéger. Cet interrupteur ferme par exemple le circuit pendant 0,6 s et l'ouvre pendant 0,3 s. Le courant obtenu entre les électrodes a la forme représentée sur la figure 1. Son affichage sur le voltmètre nécessite un réglage du zéro de l'appareil, c'est-à-dire le décalage de l'axe x le long de l'axe y pour que le zéro soit proche d'une impulsion, et un réglage de la sensibilité de manière qu'un flanc d'impulsion tel que 10 corresponde à une fraction convenable de l'échelle.

Dans l'exemple représenté, l'aiguille de l'appareil de mesure présente une oscillation correspondant à l'amplitude du flanc 10, c'est-à-dire à la différence entre les amplitudes 14 et 12. Le zéro peut être déplacé de manière qu'il se trouve pratiquement au niveau de la perturbation (l'axe de référence de ces amplitudes 14 et 12 recoupe alors le flanc 10). Cependant, la fréquence des courants perturbateurs varie (ils ont souvent une fréquence de quelques dixièmes ou centièmes de hertz), et il peut arriver que cette fréquence soit plus élevée, si bien qu'on peut observer une situation telle qu'indiquée sur la partie droite de la figure 1. Dans ce cas, la variation des courants perturbateurs est si importante qu'il est en pratique impossible d'effectuer des réglages qui donnent un résultat significatif sur l'appareil de mesure. Le procédé est alors pratiquement inutilisable. On observe par exemple un tel comportement à proximité de fortes sources perturbatrices, telles que certaines machines industrielles ou à proximité d'une voie de chemin de fer au passage d'un convoi.

Les électrodes peuvent être simplement des électrodes de cuivre ou de fer, puisque le travail en courant alternatif élimine l'effet des potentiels de contact qui ne perturbent pas irrémédiablement les mesures en courant continu. Il n'est donc pas nécessaire d'utiliser des électrodes du type cuivre/sulfate de cuivre, placées au contact du sol avec interposition d'embouts de bois imprégnés de liquide, comme dans la technique connue. Le cas échéant, le contact avec le sol peut être amélioré par un conducteur ionique, par exemple une simple solution de chlorure de sodium.

La figure 2 est une courbe analogue correspondant à la mise en oeuvre de l'invention, dans un cas beaucoup plus défavorable que celui de la figure 1. En effet, les différences de niveau dues au courant pulsé sont alors très petites.

Cependant, selon l'invention, par synchronisation, il est possible de caler une fenêtre d'échantillonnage 16 sur un flanc montant ou descendant, grâce à la synchronisation de l'appareil de mesure sur la source du courant pulsé. De cette manière, la lecture est réalisée uniquement sur le flanc de l'impulsion, comme indiqué par la référence 18. En outre, le courant est filtré, c'est-à-dire débarrassé de toutes les fréquences qui ne sont pas voisines de la fréquence du courant pulsé.

Le filtrage permet d'éliminer l'essentiel des courants autres que ceux qui sont dus au générateur de courant pulsé, et notamment les effets du courant continu, et la synchronisation permet d'effectuer la mesure uniquement lorsqu'une information significative est présente.

La figure 3 représente un schéma synoptique d'un appareil permettant la mise en oeuvre d'un tel procédé. Un circuit 20 assure la synchronisation de l'appareil de mesure sur la source de courant pulsé. Un circuit 22 assure le filtrage du signal obtenu entre les électrodes avec une bande passante relativement étroite et centrée sur la fréquence du courant pulsé. La référence 24 désigne une porte qui est commandée par le dispositif de synchronisation afin que le circuit 28 de traitement puisse déterminer le signal qui peut être affiché par un dispositif 30 d'affichage.

La référence 32 désigne symboliquement une antenne qui peut être utilisée pour la synchronisation du circuit 20. Cette synchronisation peut être réalisée par tout moyen connu. Par exemple, le générateur du courant pulsé et le circuit de synchronisation peuvent être tous deux synchronisés sur un signal externe disponible, par exemple un signal de satellite ou le signal horaire émis sur toute la surface de la Terre.

Cependant, il est plus avantageux de simplifier la synchronisation en utilisant le courant pulsé du générateur lui-même comme support de synchronisation. Plus précisément, dans ce cas, le circuit 20 utilise le courant pulsé pour synchroniser l'appareil de mesure sur le générateur de courant pulsé. De cette manière, il peut déterminer le déclenchement de la fenêtre de lecture 16. Par exemple, le circuit 20 de synchronisation peut détecter l'arrivée d'une impulsion par la ligne éventuelle 26 et commander à ce moment l'ouverture de la porte 24 qui ne reçoit le signal qu'après passage dans un circuit à retard, par exemple incorporé au circuit de filtrage 22, afin que le flanc ascendant ou descendant passe au milieu de la fenêtre 16.

Compte tenu des courants perturbateurs existant lors de la détection des défauts d'isolement de la canalisation, il est préférable que la plage de filtrage du signal soit relativement étroite. Par exemple, cette plage peut être comprise entre la moitié et le double de la fréquence du courant pulsé. Cette plage peut être élargie entre le cinquième de cette fréquence et cinq fois celle-ci ; cependant des valeurs sortant de cette plage risquent de ne pas permettre un filtrage suffisant, c'est-à-dire de provoquer l'apparition d'un signal qui n'est pas véritablement représentatif du seul flanc de l'impulsion.

Une propriété très importante de l'invention au point de vue de sa mise en oeuvre, est qu'elle possède une caractéristique d'adaptation dont ne dispose pas l'appareil connu. En effet, le générateur pulsé de l'appareil connu et, dans certains modes de réalisation, de l'appareil selon l'invention, a une fréquence qui n'est pas variable. Si des courants perturbateurs ont une fréquence proche de celle du générateur, il est possible qu'aucun signal significatif ne soit obtenu avec l'appareil classique.

Selon l'invention, la plage de mesure peut être modifiée soit par changement de fréquence de manière synchronisée à la fois au générateur de courant pulsé et à l'appareil de mesure, soit par changement de la fréquence uniquement à l'appareil de mesure qui utilise alors un multiple ou un sous-multiple de la fréquence du générateur de courant pulsé. De cette manière, l'appareil est capable de s'adapter à une plage de fréquences qui permet d'éviter au mieux des courants perturbateurs présents localement, à un endroit qui peut se trouver à plusieurs kilomètres de distance du générateur de courant pulsé lui-même.

Dans une variante, il est avantageux d'utiliser plusieurs générateurs de courant pulsé, synchronisés de la même manière. La sensibilité et la portée de l'appareil de mesure peuvent alors être accrues, par utilisation du signal donnant les meilleures performances.

Bien que le dispositif d'affichage 30 représenté sur la figure 3 puisse être avantageusement un simple afficheur qui indique une amplitude et surtout un signe pour indiquer vers quelle électrode il faut se déplacer pour se rapprocher du défaut de la canalisation, comme les utilisateurs sont habitués à utiliser un appareil sur lequel le cadran présente une tension et certaines manoeuvres sont effectuées (vérification d'une sensibilité, réglage manuel de la sensibilité, sélection d'un fonctionnement automatique), il est parfois avantageux que l'appareil ressemble à l'appareil classique. Dans ce cas, l'appareil comprend un cadran d'affichage sur lequel se déplace une aiguille, comme indiqué par la référence 34, une série de diodes photo-émissives 36 qui indiquent chacune une plage de sensibilité choisie pour l'appareil, et une série de boutons 38 utilisés pour les fonctions précitées (sélection du fonctionnement manuel ou automatique, décalage de la sensibilité, vérification de l'état des piles, etc.).

Contrairement à l'appareil classique qui indique simplement une oscillation sur un appareil de mesure de tension, l'appareil selon l'invention permet l'obtention d'une véritable information complète de sens et d'amplitude qui peut être présentée de n'importe quelle manière en fonction de l'utilisateur.

Il est bien entendu que l'invention n'a été décrite et représentée qu'à titre d'exemple préférentiel et qu'on pourra apporter toute équivalence technique dans ses éléments constitutifs sans pour autant sortir de son cadre, lequel est défini par les revendications suivantes.

## Revendications

1. Procédé de détermination d'anomalies dans le sol par détection de gradients de potentiel à la surface du sol, **caractérisé en ce qu'**il comprend :
- la création d'un courant pulsé dans le sol à l'aide d'au moins un générateur de courant pulsé de fréquence déterminée,
- la mise de deux électrodes au contact du sol à sa surface ou à son voisinage, les électrodes étant placées sur une droite qui détermine une direction,
- la connexion aux deux électrodes d'un appareil de mesure,
- la synchronisation du générateur de courant pulsé et de l'appareil de mesure,
- la commande de l'appareil de mesure pendant une fenêtre (16) synchronisée sur le générateur de courant pulsé afin que l'appareil de mesure ne détecte un signal que pendant la durée de la fenêtre (16), et
- le filtrage du signal détecté par l'appareil de mesure pour la détermination d'une valeur ayant un signe et une amplitude, le signe indiquant un sens sur la droite sur laquelle sont placées les électrodes.

2. Procédé selon la revendication 1, **caractérisé en ce que** le filtrage du signal détecté est réalisé à une fréquence comprise entre le cinquième de la fréquence du courant pulsé et cinq fois cette fréquence.

3. Procédé selon l'une des revendications 1 et 2, **caractérisé en ce qu'**il comprend en outre la variation de la bande passante de filtrage en fonction de la qualité du signal obtenu.

4. Procédé selon l'une quelconque des revendications 1 à 3, **caractérisé en ce que** la fréquence de travail de l'appareil de mesure est un multiple ou un sous-multiple de la fréquence prédéterminée du courant pulsé.

5. Procédé selon l'une quelconque des revendications précédentes, **caractérisé en ce que** la synchronisation du générateur de courant pulsé et de l'appareil de mesure est effectuée par synchronisation de l'appareil de mesure sur le flanc du courant pulsé lui-même.

6. Appareil de détermination d'anomalies dans le sol par détection à la surface du sol de gradients de potentiel créés par un générateur destiné à créer dans le sol un courant pulsé de fréquence déterminée, du type qui comprend :
- deux électrodes destinées à être mises au contact du sol à sa surface ou à son voisinage, les électrodes étant placées sur une droite qui détermine une direction, et
- un appareil de mesure connecté aux deux électrodes,
**caractérisé en ce qu'**il comprend en outre
- un dispositif (20) de synchronisation du générateur de courant pulsé et de l'appareil de mesure,
- un dispositif de commande de l'appareil de mesure pendant une fenêtre (16) synchronisée sur le générateur de courant pulsé afin que l'appareil de mesure ne détecte un signal que pendant la durée de la fenêtre (16), et
- un dispositif (22) de filtrage du signal détecté par l'appareil de mesure, destiné à déterminer une valeur ayant un signe et une amplitude, le signe indiquant un sens sur la droite sur laquelle sont placées les électrodes.

7. Appareil selon la revendication 6, **caractérisé en ce qu'**il comporte un dispositif d'affichage (30) qui indique la valeur du signal détecté sous forme d'un signe et d'une amplitude.

8. Appareil selon l'une des revendications 6 et 7, **caractérisé en ce qu'**il comporte au moins un dispositif de réglage (20) d'une caractéristique de filtrage choisie parmi la largeur de la bande de filtrage et la fréquence centrale de la bande de filtrage.

9. Appareil selon l'une quelconque des revendications 6 à 8, **caractérisé en ce qu'**il comporte un dispositif de modification de la plage de mesure par changement de fréquence de manière synchronisée à la fois au générateur de courant pulsé et à l'appareil de mesure.

10. Appareil selon l'une quelconque des revendications 6 à 8, **caractérisé en ce qu'**il comporte un dispositif de modification de la plage de mesure par changement de la fréquence de l'appareil de mesure à un multiple ou sous-multiple de la fréquence du générateur de courant pulsé.

## Patentansprüche

1. Verfahren zur Bestimmung von Besonderheiten im Boden durch Ermittlung von Potentialgradienten auf der Bodenoberfläche, **dadurch gekennzeichnet, dass** sie folgende Verfahrensschritte umfasst:
- das Erzeugen eines Impulsstromes im Boden mit Hilfe wenigstens eines Impulsstromgenerators mit vorbestimmter Frequenz,
- das Anlegen von zwei Elektroden an die Bodenoberfläche oder nahe daran, wobei die Elektroden auf einer Geraden angeordnet werden, die eine Richtung bestimmt,
- das Verbinden der beiden Elektroden mit einem Messgerät,
- die Synchronisation des Impulsstromgenerators mit dem Messgerät,
- die Betätigung des Messgeräts während eines Zeitfensters (16), das mit dem Impulsstromgenerator synchronisiert ist, so dass das Messgerät lediglich während der Dauer des Zeitfensters (16) ein Signal erfasst, und
- das Filtern des vom Messgerät erfassten Signals zur Bestimmung eines Wertes, der ein Vorzeichen und eine Amplitude aufweist, wobei das Vorzeichen eine Richtung auf der Geraden bezeichnet, auf der die Elektroden angeordnet sind.

2. Verfahren nach Anspruch 1, **dadurch gekennzeichnet, dass** das Filtern des erfassten Signals mit einer Frequenz erfolgt, die zwischen der fünften Frequenz des Impulsstromes und dem fünffachen dieser Frequenz liegt.

3. Verfahren nach einem der Ansprüche 1 und 2, **dadurch gekennzeichnet, dass** es ferner die Veränderung der Filterbandbreite in Abhängigkeit von der Qualität des erhaltenen Signals umfasst.

4. Verfahren nach wenigstens einem der Ansprüche 1 bis 3, **dadurch gekennzeichnet, dass** die Arbeitsfrequenz des Messgeräts ein Mehrfaches oder ein Teilmehrfaches der vorbestimmten Frequenz des Impulsstromes ist.

5. Verfahren nach wenigstens einem der vorangegangenen Ansprüche, **dadurch gekennzeichnet, dass** die Synchronisation des Impulsstromgenerators mit dem Messgerät durch die Synchronisation des Messgeräts mit der Impulsstromflanke selbst erfolgt.

6. Vorrichtung zur Bestimmung von Besonderheiten im Boden durch Ermittlung von Potentialgradienten auf der Bodenoberfläche, die von einem Generator erzeugt werden, der dazu bestimmt ist, einen Impulsstrom vorbestimmter Frequenz im Boden zu erzeugen, enthaltend:
- zwei Elektroden, die an der Bodenoberfläche oder nahe daran angelegt werden können, wobei die Elektroden auf einer Geraden angeordnet sind, die eine Richtung bestimmt, und
- ein Messgerät, das mit den zwei Elektroden verbunden ist,
**dadurch gekennzeichnet, dass** sie weiterhin enthält:
- eine Vorrichtung (20) zur Synchronisation des Impulsstromgenerators mit dem Messgerät,
- eine Vorrichtung zur Betätigung des Messgeräts während eines Zeitfensters (16), das mit dem Impulsstromgenerator synchronisiert ist, so dass das Messgerät lediglich während der Dauer des Zeitfensters (16) ein Signal erfasst, und
- eine Vorrichtung zum Filtern des vom Messgerät erfassten Signals zur Bestimmung eines Wertes, der ein Vorzeichen und eine Amplitude aufweist, wobei das Vorzeichen eine Richtung auf der Geraden bezeichnet, auf der die Elektroden angeordnet sind.

7. Vorrichtung nach Anspruch 6, **dadurch gekennzeichnet, dass** sie ein Anzeigegerät (30) umfasst, das den Wert des erfassten Signals in Form eines Vorzeichens und einer Amplitude anzeigt.

8. Vorrichtung nach einem der Ansprüche 6 und 7, **dadurch gekennzeichnet, dass** sie wenigstens eine Vorrichtung (20) zur Steuerung eines Filtermerkmals enthält, das unter der Filterbandbreite und der Zentralfrequenz des Filterbandes ausgewählt wird.

9. Vorrichtung nach wenigstens einem der Ansprüche 6 bis 8, **dadurch gekennzeichnet, dass** sie eine Vorrichtung zur Veränderung des Maßbereichs durch Veränderung der Frequenz in Synchronisation mit dem Impulsstromgenerator und dem Messgerät enthält.

10. Vorrichtung nach wenigstens einem der Ansprüche 6 bis 8, **dadurch gekennzeichnet, dass** sie eine Vorrichtung zur Veränderung des Maßbereichs durch Veränderung der Frequenz des Messgeräts auf ein Mehrfaches oder ein Teilmehrfaches der Frequenz des Impulsstromgenerators enthält.

## Claims

1. A method of determining anomalies in the ground by detecting potential gradients on the surface of the ground, the method being **characterized in that** it comprises:
· creating pulsating current in the ground by using at least one pulsating current generator of determined frequency;
· putting two electrodes into contact with the ground on its surface or in the vicinity thereof, the electrodes being placed on a straight line that defines an axis;
· connecting a measuring appliance to the two electrodes;
· synchronizing the pulsating current generator and the measuring appliance;
· controlling the measuring appliance during a window (16) synchronized on the pulsating current generator so that the measuring appliance detects a signal only during the duration of the window (16); and
· filtering the signal detected by the measuring appliance to determine a value having a sign and an amplitude, the sign indicating the direction along the straight line in which the electrodes are placed.

2. A method according to claim 1, **characterized in that** the detected signal is filtered at a frequency lying in the range one-fifth the frequency of the pulsating current and five times said frequency.

3. A method according to claim 1 or claim 2, **characterized in that** it further comprises varying the passband of the filter as a function of the quality of the signal obtained.

4. A method according to any one of claims 1 to 3, **characterized in that** the working frequency of the measuring appliance is a multiple or a submultiple of the predetermined frequency of the pulsating current.

5. A method according to any preceding claim, **characterized in that** the pulsating current generator and the measuring appliance are synchronized by synchronizing the measuring appliance on the edges of the pulsating current itself.

6. Apparatus for determining anomalies in the ground by detecting at the surface of the ground potential gradients created by a generator for creating a pulsating current of determined frequency in the ground, the appliance being of the type which comprises:
· two electrodes for putting into contact with the ground at its surface or in the vicinity thereof, the electrodes being placed on a straight line which determines an axis; and
· a measuring appliance connected to the two electrodes;
the appliance for determining anomalies being **characterized in that** it further comprises:
· a device (20) for synchronizing the pulsating current generator and the measuring appliance;
· a device for controlling the measuring appliance during a window (16) synchronized with the pulsating current generator to cause the measuring appliance to detect a signal only during the duration of the window (16); and
· a device (22) for filtering the signal detected by the measuring appliance in order to determine a value that has a sign and an amplitude, the sign indicating a direction along the straight line in which the electrodes are placed.

7. An appliance according to claim 6, **characterized in that** it includes a display device (30) which indicates the value of the detected signal in the form of a sign and an amplitude.

8. An appliance according to claim 6 or claim 7, **characterized in that** it includes at least one device (20) for adjusting a filter characteristic selected from filter bandwidth and center frequency of the filter band.

9. An appliance according to any one of claims 6 to 8, **characterized in that** it includes a device for modifying measuring range by changing frequency in synchronous manner both of the pulsating current generator and of the measuring appliance.

10. An appliance according to any one of claims 6 to 8, **characterized in that** it includes a device for modifying measuring range by changing the frequency of the measuring appliance to a multiple or a submultiple of the frequency of the pulsating current generator.
